# EUROPEAN PATENT SPECIFICATION

(11) **EP 1 915 656 B1**
(45) Date of publication and mention of the grant of the patent: **19.10.2011**
(21) Application number: 06776690.7
(22) Date of filing: 08.08.2006
(51) Int. Cl.: G05B 19/05, G05B 19/042, G08C 23/02, H04B 11/00

(54) **AUTOMATION NETWORK FIELD DEVICE USING ULTRASOUND COMMUNICATION LINK**
AUTOMATISIERUNGSNETZ-FELDGERÄT MIT ULTRASCHALL-KOMMUNIKATIONSVERBINDUNG
DISPOSITIF DE TERRAIN DE RÉSEAU D'AUTOMATISATION UTILISANT UNE LIAISON DE COMMUNICATION A ULTRASON

(30) Priority: 16.08.2005 DE 102005038607; 16.08.2005 US 709090 P
(43) Date of publication of application: 30.04.2008
(73) Proprietor: VEGA Grieshaber KG, 77709 Wolfach (DE)
(72) Inventor: FEHRENBACH, Josef, 77716 Haslach (DE)
(74) Representative: Kopf, Korbinian Paul
(86) International application number: PCT/EP2006/007856
(87) International publication number: WO 2007/019992

(56) References cited:
- EP-A2- 0 940 738
- DE-A1- 10 218 606
- DE-A1- 19 703 854
- DE-A1-102004 029 022
- US-A1- 2004 260 538

## Description

### Field of the Invention:

The present invention relates to process automation. In particular, the present invention relates to a field device for process automation, to the use of such a field device for fill level measuring, and to a method for operating such a field device.

### Background of the Invention:

In process automation technology, field devices are used that serve to acquire and/or control process variables.

Such field devices are, for example, fill level meters, manometers, thermometers, flow meters and the like, which by means of their sensors acquire the corresponding process variables, such as fill level, pressure, temperature or flow.

So-called actuators such as valves, heating elements, cooling elements or pumps, by means of which actuators process variables may subsequently be influenced, are further examples of such field devices

Moreover, the field devices may be designed in the form of input units or output units that control or select the sensors or actuators.

In order to parameterise or scan such field devices, a process control system may be used which, using a cable, is connected to the field device by way of a corresponding interface. Furthermore, an input module may be firmly connected to the field device. For parameterisation or scanning, the field device is then opened, and the input unit is operated manually.

Patent specification DE 103 26 627 A1 relates to a method for displaying the function of a field device relating to process automation technology. In this arrangement a radio signal is transmitted from a transmitting unit to the field device, which triggers a scan of the field device status in the field device. Corresponding to the result of the device scan, a perceptible signal is generated.

DE 197 03 854 A1 describes an arrangement having sensors and a data acquisition unit. The sensors contain transmitters and the data acquisition unit has at least one receiver for the wireless transfer of measurement data from the sensors to the data acquisition unit.

DE 10 2004 029022 A1 describes a method of configuring a wireless enabled field device comprises receiving the field device identification information, comparing the identification information to a configuration database, retrieving the configuration information associated with the field device and sending the configuration information to the field device via at least one wireless communication link to configure the field device.

DE 102 18 606 A1 describes a potentiometric sensor comprising an elementary sensor for determining a potentiometric parameter, and an intersecting point for emitting a signal depending on the potentiometric parameter to a transmitter.

US 2004/260538 A1 describes a system for providing voice input to a subcomponent of an automation system.

EP 0 940 738 A2 describes an apparatus for accessing field devices in a distributed control system provides non-redundant secondary access to a plurality of field devices that are controlled by a control room.

### PRESENTATION OF THE INVENTION:

It is an object of the present invention to state improved operation of field devices.

This object is met by the subject-matter of the independent claims.

According to the invention a field device for process automation is stated, comprising a detector for detecting a first acoustic signal, a control unit for carrying out an operating step as a reaction to the detected first acoustic signal, wherein the operating step comprises parameterisation, an operational check or a data scan; and a housing (102), said housing being the housing of the field device (100) and being completely closed, wherein the detector (101) is arranged in the interior of the housing (102) such that the detection of the first acoustic signal takes place through a wall of the housing.

By providing a detector for the detection of acoustic signals the field device may be addressed in a contactless manner. In this arrangement data transmission takes place acoustically, by sound waves that are picked up by the detector. Such sound waves are easy to generate, and propagate even through a housing wall of the field device into the interior of the field device.

Furthermore, the field device may also be operated without any direct visual contact to the field device, such as around corners or through barriers (for example a wall or the like) because the sound waves may also propagate through masonry and around corners.

According to a further exemplary embodiment of the present invention the first acoustic signal comprises parameterisation data for carrying out parameterisation.

In this way, data that is required for the parameterisation of the field device may be transmitted to the field device, as acoustic signals, in a contactless manner from the outside.

According to a further exemplary embodiment of the present invention the field device further comprises a memory for storing measured data. To this purpose the field device may comprise a measuring unit or may be connected to a measuring unit that supplies the data. For example, the measuring unit may be a fill level sensor.

According to a further exemplary embodiment of the present invention the first acoustic signal is an ultrasound signal. By using ultrasound signals, due to the high frequency involved, relative high data density may be transmitted. Furthermore, ultrasound signals are not located in the audible spectrum so that it may not be possible to expose the surroundings to noise. According to a further exemplary embodiment of the present invention the first acoustic signal may be generated by a handheld transmitter or a stationary computer.

By generating the acoustic signal by means of an electrical device such as a mobile phone, handheld device or a PC, it may be possible to transmit precisely defined signal sequences. For example, specific keys of the handheld transmitter may trigger the transmission of specific signal sequences. In this way simple and interference-free operation may be ensured.

According to a further exemplary embodiment of the present invention the first acoustic signal may be generated by a person.

For example, the person may speak a specific chain of orders so as to trigger an operational check or data scan. It may also be possible for the user (person) to orally carry out parameterisation of the field device. There may thus be no need for an additional handheld transmitter or an external computer for triggering the field device.

According to a further exemplary embodiment of the present invention the detector comprises a sound transducer for transforming the first acoustic signal to an electrical signal.

For example, the detected sound signal may thus be digitised for further processing.

According to a further exemplary embodiment of the present invention the sound transducer comprises a piezoelectric element. This use of a piezoelectric element may provide simple and effective transformation of the acoustic signal to an electrical signal.

The detector is arranged in the interior of the housing of the field device so that the detector is largely protected from external influences.

In particular, it may be possible to design the housing so that it is pressure-proof so that the electronics arranged in the housing, together with the detector, are protected even in the case of extreme external conditions.

In particular, arranging the detector in the interior of the housing may result in there being no need to provide holes for cable bushings or the like. The sensor may completely be arranged in the interior of the housing, and data transmission between the external handheld transmitter or the external computer or user and the detector may take place in a contactless manner through the wall of the housing. There may be no need to provide any windows, leadthroughs or the like. In this way the stability of the field device, its robustness and durability may be significantly improved.

According to a further exemplary embodiment of the present invention the detector is directly affixed to an interior wall of the housing. For example, the detector may be in the form of a piezoelectric element that is glued onto the interior wall and that thus picks up vibrations or oscillations of the internal wall, which vibrations or oscillations are generated by the sound impinging from the outside, and transforms said vibrations or oscillations to a corresponding electrical signal.

The housing may be made from a shielding material, such as for example a metal or a ferromagnetic material, which may prevent the transmission of radio waves or magnetic signals.

According to a further exemplary embodiment of the present invention the detector is arranged within an electronics unit. For example, the detector and the evaluation electronics or control electronics and regulation electronics may be arranged in a housing within the field device. Furthermore, it may be possible for at least some of the detector to form part of an integrated circuit which is part of the electronics of the field device.

According to a further exemplary embodiment of the present invention the detector comprises a laser for detecting mechanical oscillations, wherein the mechanical oscillations are generated by the first acoustic signal.

By means of such a laser it may be possible to detect minimal oscillation amplitudes. Optical detection of mechanical oscillations (for example of the housing wall) may make possible sensitive detection. For example, the laser light may be directed onto the interior housing surface, from which surface it is subsequently reflected. A photodiode may then, for example, by means of interferometry, measure and subsequently analyse the reflected signal.

According to a further exemplary embodiment of the present invention the field device further comprises a transmitter for transmitting a second acoustic signal, wherein the second acoustic signal comprises scanned data that results from the carried-out scan, or operational check data that results from the carried-out operational check.

In this way bidirectional data exchange between the field device on the one hand and a user or a corresponding device on the other hand may be possible, which data exchange is based on acoustic signals.

According to a further exemplary embodiment of the present invention the detector and the transmitter form an operational unit. The detector and sender may thus be the same device (for example a piezo crystal), which is alternately used for detection and transmission.

According to a further exemplary embodiment of the present invention the use of a field device according to the above exemplary embodiments is stated for fill level measuring. Fill level measuring devices may thus be parameterised, checked or scanned in a contactless manner by way of acoustic signals.

According to the invention a method for operating a field device is stated according to claim 16.

According to an exemplary embodiment of the present invention, for example a first acoustic signal is externally transmitted and subsequently received in the interior of the field device, after which, for example, parameterisation of the field device is carried out.

To this purpose, according to a further exemplary embodiment of the present invention, the acoustic signal comprises parameterisation data, wherein parameterisation takes place on the basis of the parameterisation data.

Thus the data required for parameterisation is acoustically transmitted to the field device. Likewise, an operational check or data scan may be triggered by an acoustic signal.

In a simple case the acoustic signal may, for example, be a spoken command.

According to a further exemplary embodiment of the present invention a second acoustic signal is transmitted, which comprises scanned data resulting from the data scan that has been carried out.

Furthermore, the second acoustic signal may comprise operational check data resulting from the operational check that has been carried out.

Thus, communication between an external user, handheld device or computer on the one hand and the field device on the other hand may be carried out acoustically. In this arrangement, communication may be unidirectional or bidirectional. The field device is acoustically parameterised or scanned. As a reaction to parameterisation, for example, a feedback signal may be transmitted which documents successful or unsuccessful completion of parameterisation.

### BRIEF DESCRIPTION OF THE DRAWINGS:

Further exemplary embodiments of the present invention are stated in the subordinate claims.

Below, preferred exemplary embodiments of the present invention are described with reference to the figures.
Fig. 1 shows an external operating unit and a field device according to an exemplary embodiment of the present invention.
Fig. 2 shows an external operating unit and a field device according to another exemplary embodiment of the present invention.
Fig. 3 shows two external operating units and a field device according to a further exemplary embodiment of the present invention.
Fig. 4 shows an external operating unit and a field device with optical detection according to an exemplary embodiment of the present invention.
Fig. 5 shows an external operating unit and a field device with a wireless interface according to a further exemplary embodiment of the present invention.

### DETAILED DESCRIPTION OF THE PREFERRED EMBODIMENTS:

In the following description of the figures, the same reference characters are used for identical or similar elements. ,

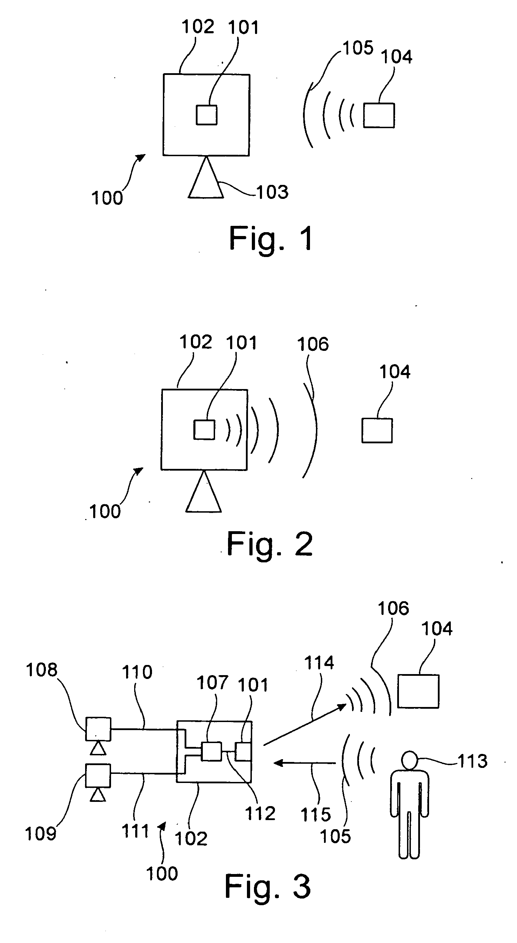

Fig. 1 shows an external operating unit 104 and a field device 100 according to an exemplary embodiment of the present invention. The field device 100 comprises a housing 102 in which there is a detector 101 for detecting an acoustic signal 105. Furthermore, the field device 100 comprises an element 103, which is for example a sensor such as an antenna for determining a fill level. Of course the sensor may also be a mass flow meter, a pressure sensor or some other sensor. The element 103 may also be an actuator that actively influences process variables, such as for example a valve for adjusting the flow of a liquid in a pipeline section or a pump, in order to change a fill level.

The external operating unit 104 is designed to emit acoustic waves 105 that are used for signal transmission between the external operating unit 104 and the field device 100.

The acoustic waves 105, which are for example ultrasound waves or sound waves in the audible range, penetrate the housing 102 and enter the interior of the housing 102 where they reach the detector 101, which detects the received waves.

In this process the detector 101 transforms the detected sound, e.g. into an electronic signal that is subsequently forwarded to a control unit. The control unit forms, for example, part of the detector 101 or it is an additional component 107 which is connected to the detector 101 by way of a data line 112 (see Fig. 3).

In this arrangement the control unit is used to carry out an operating step as a reaction to the detected first acoustic signal 105.

This operating step may, for example, involve parameterisation of the field device 100. In this process the acoustic signals 105 contain parameterisation data for carrying out parameterisation.

Furthermore, the operating step may involve an operational check of the field device 100 or of its operational components or operational sequences. In this case operational checking may be triggered by the acoustic signal 105 and then progresses automatically.

The result of such an operational check may subsequently be transmitted by the detector 101 in the form of a second acoustic signal 106. This is shown in Fig. 2. In the example shown in Fig. 2 the detector 101 is not only used for detecting the first acoustic signals 105, but also for emitting or radiating the second acoustic signals 106. This is thus not only a detector, but at the same time also a transmitter.

For example, the detector 101 may be designed in the form of a piezoelectric element that transforms the sound waves into electrical signals. Conversely, by way of the piezoelectric element, electrical signals may be transformed into corresponding sound waves.

Of course, the transmitter and detector 101 may also be two separate units. For example, the detector may be a microphone or a piezo crystal. The transmitter may be a loudspeaker or the like. If the detector 101 and transmitter are designed so as to be separate, detection may take place concurrently with corresponding transmission of a second acoustic signal (bidirectionality).

The transmitted acoustic signal 106 penetrates the housing wall 102 and is received by the external operating unit 104. In the case of an operational check, the second acoustic signal 106 comprises information as to whether or not the field device is operating faultlessly, or as to the nature of any faults that have been detected. In the case of data scanning, which may be triggered by the external operating unit 104, the second acoustic signals 106 comprise corresponding data that was previously detected by the sensor 103 and that was, for example, stored in a memory of the field device (not shown in Fig. 2).

As shown in Fig. 2, the detector 101 is arranged in the interior of the housing 102. The housing may thus be completely closed. There may be no need to provide any leadthroughs or windows for detection of the parameterisation data. In this way the stability, robustness and resistance of the housing may be improved significantly so that for example explosion protection in the form of a pressure-proof design is possible.

In particular, the housing may be designed to provide shielding so that sensitive devices in the interior of the housing are protected from external influences (such as electromagnetic or magnetic fields).

Fig. 3 shows a further exemplary embodiment of the present invention in which the detector 101 is arranged on an inside of the housing 102 so that oscillations of the interior of the housing are directly detectable. The detector 101 is connected, by way of a data line 112, to a control unit 107 that receives signals from the detector 101 (which signals are based on the detected acoustic signals). The control unit 107 is used for carrying out operating steps as a reaction to the detected acoustic signals. For example, the control unit 107 may control and regulate the sensors 108, 109 by way of the data lines 110, 111. Furthermore, the control unit 107 may query or monitor the sensors 108, 109. The measured data of the sensors 108, 109 may be transmitted, by way of the data lines 110,111,112, to the detector/transmitter which subsequently generates a corresponding acoustic signal 106. The acoustic signal 106 is transmitted in the direction 114 of the external operating unit, and is detected by said external operating unit.

The external operating unit 104 is, for example, a handheld transmitter or a handheld receiver (such as for example a mobile phone or a handheld device) or a stationary computer or a corresponding computer interface.

As shown in Fig. 3, the first acoustic signals 105 are transmitted directly from the user 113 in the direction 115 of the field device 100. These signals are, for example, spoken commands that are subsequently detected by the detector 101. For the purpose of evaluating the spoken commands the detector is, for example, connected to an arithmetic-logic unit on which a corresponding word recognition program runs. This arithmetic-logic unit is, for example, integrated in the control unit 107, but it may also be arranged so as to be separate from the control unit 107.

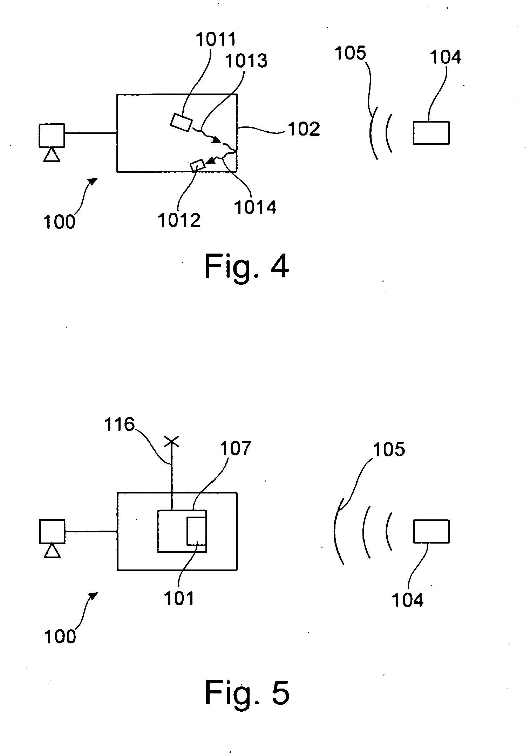

Fig. 4 shows a further exemplary embodiment of the field device according to the present invention. In this arrangement the detector comprises a laser 1011, which emits a laser beam 1013 in the direction of the housing 102. Since the external operating unit 104 emits acoustic signals 105 onto the housing 102, the housing 102 is excited, resulting in mechanical oscillations. These mechanical oscillations may be detected by a detector arrangement 1012 via the laser beam 1014 that is reflected on the interior of the housing. Of course, other optical methods for detecting housing oscillations may also be possible.

Fig. 5 shows a further embodiment according to an exemplary embodiment of the present invention. As shown in Fig. 5, the detector 101 is arranged within the control unit 107. Furthermore, the control unit 107 comprises a transmitting unit 116 that is designed for wireless transmission, using radio communication, of scanned data or other signals to a process control system. The transmitter 116 may also be designed as a transmitter/receiver unit.

The described field device 100 is in particular suitable for use in fill level measuring.

The invention is particularly well suited to fill level measuring, but it is in no way limited to this field of application. The invention may be applied wherever field devices have to be parameterised, monitored or scanned.

## Claims

1. A field device (100) for process automation, the field device comprising:
a detector (101) for detecting a first acoustic signal;
a control unit (101, 107) for carrying out an operating step as a reaction to the detected first acoustic signal, wherein the operating step comprises parameterisation, an operational check or a data scan; and
a housing (102), said housing being the housing of the field device (100) and being completely closed
**characterized in that**
the detector (101) is arranged in the interior of the housing (102) such that the detection of the first acoustic signal takes place through a wall of the housing.

2. The field device according to claim 1,
wherein the first acoustic signal comprises parameterisation data for carrying out parameterisation.

3. The field device according to claim 1 or 2, further comprising:
a memory;
wherein the operating step comprises a data scan; and
wherein the scanned data is stored in the memory of the field device.

4. The field device according to one of claims 1-3,
wherein the first acoustic signal is an ultrasound signal.

5. The field device according to one of the preceding claims,
wherein the field device (100) is adapted for receiving the first acoustic signal generated by a handheld transmitter (104) or a stationary computer (104).

6. The field device according to one of claims 1 to 3 and 5,
wherein the first acoustic signal can be generated by a person (113).

7. The field device according to one of the preceding claims,
wherein the detector (101) comprises a sound transducer for transforming the first acoustic signal to an electrical signal.

8. The field device according to claim 7,
wherein the sound transducer comprises a piezoelectric element.

9. The field device according to claim 8,
wherein the detector (101) is directly affixed to an interior wall of the housing (102).

10. The field device according to one of the preceding claims,
wherein the detector (101) is arranged within the control unit (101,107).

11. The field device according to one of claims 9 and 10,
wherein the housing (102) is pressure-proof.

12. The field device according to one of the preceding claims,
wherein the detector (1012) comprises a laser (1011) for detecting mechanical oscillations;
wherein the mechanical oscillations are generated by the first acoustic signal.

13. The field device according to one of claims 2-12, further comprising:
a transmitter (101) for transmitting a second acoustic signal;
wherein the second acoustic signal comprises scanned data that results from a carried-out data scan, or operational check data that results from a carried-out operational check.

14. The field device according to claim 13,
wherein the detector (101) and the transmitter (101) form an operational unit (101).

15. The use of a field device (100) according to one of claims 1-14 for fill level measuring.

16. A method for operating a field device with a detector arranged in the interior of a housing (102), said housing being the housing of the field device (100) and being completely closed, the method comprising the steps of:
detection of a first acoustic signal using the detector;
at least one of a parameterisation, an operational check and a data scan as a reaction to the detected first acoustic signal;
wherein
the detection of the first acoustic signal takes place through a wall of the housing.

17. The method according to claim 16,
wherein the first acoustic signal comprises parameterisation data;
wherein parameterisation takes place on the basis of the parameterisation data.

18. The method according to claim 16 or 17,
comprising a data scan, wherein the scanned data is stored in a memory of the field device.

19. The method according to one of claims 16-18, further comprising the step of:
transmitting a second acoustic signal;
wherein the second acoustic signal comprises scanned data that results from a carried-out data scan.

20. The method according to one of claims 16-19,
wherein the second acoustic signal comprises operational check data that results from a carried-out operational check.

## Patentansprüche

1. Ein Feldgerät (100) zur Prozessautomatisierung, das Feldgerät aufweisend
einen Detektor (101) zum Detektieren eines ersten akustischen Signals;
eine Steuereinheit (101, 107) zum Durchführen eines Arbeitsschrittes als eine Reaktion auf das detektierte erste akustische Signal, wobei der Arbeitsschritt eine Parametrisierung, eine Funktionsüberprüfung oder eine Messweitabfrage umfasst; und ein Gehäuse (102), wobei das Gehäuse das Gehäuse des Feldgerätes (100) und vollständig geschlossen ist,
**dadurch gekennzeichnet, dass**
der Detektor (101) im Inneren des Gehäuses (102) angeordnet ist, so dass die Detektion des ersten akustischen Signals durch die Gehäusewandung erfolgt.

2. Das Feldgerät gemäß Anspruch 1,
wobei das erste akustische Signal Parametrisierungsdaten zur Durchführung der Parametrisierung aufweist.

3. Das Feldgerät gemäß Anspruch 1 oder 2, weiterhin aufweisend einen Speicher;
wobei der Arbeitsschritt eine Messwertabfrage umfasst; und
wobei die gescannten Daten im Speicher des Feldgerätes gespeichert werden.

4. Das Feldgerät gemäß einem der Ansprüche 1 bis 3,
wobei das erste akustische Signal ein Ultraschallsignal ist.

5. Das Feldgerät gemäß einem der vorhergehenden Ansprüche,
wobei das Feldgerät (100) zum Empfang des ersten akustischen Signals eingerichtet ist, welches durch einen Handsender (104) oder einen stationären Computer (104) erzeugt ist.

6. Das Feldgerät gemäß einem der Ansprüche 1 bis 3 und 5,
wobei das erste akustische Signal von einer Person erzeugbar ist.

7. Das Feldgerät gemäß einem der vorhergehenden Ansprüche,
wobei der Detektor (101) einen Schallwandler zur Umwandlung des ersten akustischen Signals in ein elektrisches Signal aufweist.

8. Das Feldgerät gemäß Anspruch 7,
wobei der Schallwandler ein piezoelektrisches Element aufweist.

9. Das Feldgerät gemäß Anspruch 8,
wobei der Detektor direkt an der Innenseite des Gehäuses (102) angebracht ist.

10. Das Feldgerät gemäß einem der vorhergehenden Ansprüche,
wobei der Detektor (101) innerhalb der Steuereinheit (101, 107) angeordnet ist.

11. Das Feldgerät gemäß einem der Ansprüche 9 und 10,
wobei das Gehäuse (102) druckdicht ausgebildet ist.

12. Das Feldgerät gemäß einem der vorhergehenden Ansprüche,
wobei der Detektor (1012) einen Laser (1011) zum Delektieren von mechanischen Oszillationen aufweist,
wobei die mechanischen Oszillationen durch das erste akustische Signal generiert werden.

13. Das Feldgerät gemäß einem der Ansprüche 2 bis 12, weiterhin aufweisend:
einen Sender (101) zum Aussenden eines zweiten akustischen Signals;
wobei das zweite akustische Signal gescannte Daten von einer ausgeführten Messwertabfrage aufweist oder Funktionsüberprüfungsdaten, die aus einer durchgeführten Funktionsüberprüfung resultieren.

14. Das Feldgerät gemäß Anspruch 13,
wobei der Detektor (101) und der Sender (101) eine funktionale Einheit (101) bilden.

15. Verwendung eines Feldgerätes (100) gemäß einem der Ansprüche 1 bis 14 zur Füllstandsmessung.

16. Verfahren zum Betrieb eines Feldgerätes mit einem Detektor, angeordnet im Inneren eines Gehäuses (102), wobei das Gehäuse das Gehäuse des Feldgerätes (100) und vollständig geschlossen ist, das Verfahren aufweisend die Schritte:
Detektion eines ersten akustischen Signals unter Verwendung eines Detektors;
zumindest ein Element von Parametrisierung, Funktionsüberprüfung und
Messwertabfrage als Reaktion auf das detektierte erste akustische Signal,
wobei die Detektion des ersten akustischen Signals durch die Gehäusewandung erfolgt.

17. Das Verfahren gemäß Anspruch 16,
wobei das erste akustische Signal Parametrisierungsdaten aufweist;
wobei die Parametrisierung auf Basis der Parametrisierungsdaten erfolgt.

18. Das Verfahren gemäß Anspruch 16 oder 17,
aufweisend eine Messwertabfrage, wobei die abgefragten Daten in einem Speicher des Feldgerätes gespeichert werden.

19. Das Verfahren gemäß einem der Ansprüche 16 bis 18,
weiterhin aufweisend die Schritte:
Übertragen eines zweiten akustischen Signals;
wobei das zweite akustische Signal Messwertdaten aufweist, welche aus einer erfolgten Messwertabfrage resultieren.

20. Das Verfahren gemäß einem der Ansprüche 16 bis 19,
wobei das zweite akustische Signal Funktionsüberprüfungsdaten aufweist, die aus einer durchgeführten Funktionsüberprüfung resultieren.

## Revendications

1. Dispositif de terrain (100) pour une automatisation de processus, le dispositif de terrain comportant :
un détecteur (101) pour détecter un premier signal acoustique,
une unité de commande (101, 107) pour exécuter une étape fonctionnelle en réaction au premier signal acoustique détecté, dans lequel l'étape fonctionnelle comporte un paramétrage, une vérification fonctionnelle ou un balayage de données, et
un boîtier (102), ledit boîtier étant le boîtier du dispositif de terrain (100) et étant entièrement fermé
**caractérisé en ce que**
le détecteur (101) est agencé à l'intérieur du boîtier (102) de telle sorte que la détection du premier signal acoustique a lieu à travers une paroi du boîtier.

2. Dispositif de terrain selon la revendication 1,
dans lequel le premier signal acoustique comporte des données de paramétrage pour mettre en oeuvre un paramétrage.

3. Dispositif de terrain selon la revendication 1 ou 2, comportant en outre :
une mémoire,
dans lequel l'étape fonctionnelle comporte un balayage de données, et
dans lequel les données balayées sont mémorisées dans la mémoire du dispositif de terrain.

4. Dispositif de terrain selon l'une des revendications 1 à 3,
dans lequel le premier signal acoustique est un signal ultrasonore.

5. Dispositif de terrain selon l'une des revendications précédentes,
dans lequel le dispositif de terrain (100) est adapté pour recevoir le premier signal acoustique généré par un émetteur portatif (104) ou un ordinateur fixe (104).

6. Dispositif de terrain selon l'une des revendications 1 à 3 et 5,
dans lequel le premier signal acoustique peut être généré par une personne (113).

7. Dispositif de terrain selon l'une des revendications précédentes,
dans lequel le détecteur (101) comporte un transducteur sonore pour transformer le premier signal acoustique en un signal électrique.

8. Dispositif de terrain selon la revendication 7,
dans lequel le transducteur sonore comporte un élément piézoélectrique,

9. Dispositif de terrain selon la revendication 8,
dans lequel le détecteur (101) est directement fixé sur une paroi intérieure du boîtier (102).

10. Dispositif de terrain selon l'une des revendications précédentes,
dans lequel le détecteur (101) est agencé à l'intérieur de l'unité de commande (101,107).

11. Dispositif de terrain selon l'une des revendications 9 et 10,
dans lequel le boîtier (102) est résistant à la pression.

12. Dispositif de terrain selon l'une des revendications précédentes,
dans lequel le détecteur (1012) comporte un laser (1011) pour détecter des oscillations mécaniques,
dans lequel les oscillations mécaniques sont générées par le premier signal acoustique.

13. Dispositif de terrain selon l'une des revendications 2 à 12, comportant en outre :
un émetteur (101) pour émettre un second signal acoustique,
dans lequel le second signal acoustique comporte des données balayées qui résultent d'un balayage de données effectué, ou des données de vérification fonctionnelle qui résultent d'une vérification fonctionnelle effectué.

14. Dispositif de terrain selon la revendication 13,
dans lequel le détecteur (101) et l'émetteur (101) forment une unité fonctionnelle (101).

15. Utilisation d'un dispositif de terrain (100) selon l'une des revendications 1 à 14 pour une mesure de niveau de remplissage.

16. Procédé pour faire fonctionner un dispositif de terrain avec un détecteur agencé à l'intérieur d'un boîtier (102), ledit boîtier étant le boîtier du dispositif de terrain (100) et étant entièrement fermé, le procédé comportant les étapes de :
détection d'un premier signal acoustique en utilisant le détecteur,
au moins une action parmi un paramétrage, une vérification fonctionnelle et un balayage de données en réaction au premier signal acoustique détecté,
dans lequel la détection du premier signal acoustique a lieu à travers une paroi du boîtier.

17. Procédé selon la revendication 16,
dans lequel le premier signal acoustique comporte des données de paramétrage,
dans lequel le paramétrage a lieu sur la base des données de paramétrage.

18. Procédé selon la revendication 16 ou 17,
comportant un balayage de données, dans lequel les données balayées sont mémorisées dans une mémoire du dispositif de terrain.

19. Procédé selon l'une des revendications 16 à 18, comportant en outre l'étape consistant à :
émettre un second signal acoustique,
dans lequel le second signal acoustique comporte des données balayées qui résultent d'un balayage de données effectué.

20. Procédé selon l'une des revendications 16 à 19,
dans lequel le second signal acoustique comporte des données de vérification fonctionnelle qui résultent d'une vérification fonctionnelle effectuée.
